# FASCICULE DE BREVET EUROPEEN

(11) **EP 2 637 375 B1**
(45) Date de publication et mention de la délivrance du brevet: **08.08.2018**
(21) Numéro de dépôt: 13158222.3
(22) Date de dépôt: 07.03.2013
(51) Int. Cl.: H04L 25/06, G01S 19/21, H04K 3/00

(54) **Procede et recepteur pour supprimer un signal de brouillage a controle automatique numerique du seuil de decision**
Verfahren und Empfänger zur Unterdrückung eines Verzerrungssignals mit automatischer digitaler Kontrolle der Entscheidungsschwelle
Method and receiver for cancelling an interference signal with automatic digital control of the decision threshold

(30) Priorité: 07.03.2012 FR 1200686
(43) Date de publication de la demande: 11.09.2013
(73) Titulaire: Safran Electronics & Defense, 92100 Boulogne-Billancourt (FR)
(72) Inventeur: Lilbert, Arnaud, 75015 Paris (FR); Chaminadas, Francis, 75015 Paris (FR); Le Liboux, Jean-Christophe, 75015 Paris (FR)
(74) Mandataire: Regimbeau

(56) Documents cités:
- US-A1- 2004 257 253
- US-B1- 7 324 037
- YOUN-SUNG LEE ET AL: "Design and Implementation of AISG Modem for Antenna Line Device", COMPUTERS, NETWORKS, SYSTEMS AND INDUSTRIAL ENGINEERING (CNSI), 2011 FIRST ACIS/JNU INTERNATIONAL CONFERENCE ON, IEEE, 23 mai 2011 (2011-05-23), pages 314-319, XP031895248, DOI: 10.1109/CNSI.2011.38 ISBN: 978-1-4577-0180-1

## Description

### DOMAINE DE L'INVENTION

Le domaine de l'invention est celui des récepteurs de signaux radiofréquences, plus particulièrement des signaux à large bande à étalement de spectre tels que les signaux GNSS (Global Navigation Satellite System). L'invention vise plus particulièrement à améliorer la tenue au brouillage de tels récepteurs.

### ARRIERE PLAN DE L'INVENTION

Le principe connu de localisation GPS (Global Positioning System) ou GNSS utilise des mesures de signaux radioélectriques reçus d'une constellation de satellites.

La distance importante des satellites à la Terre, ainsi que les techniques d'étalement de spectre utilisées, impliquent que les signaux radioélectriques reçus à la surface de la Terre sont de très faible puissance (-130 dBm, soit 10⁻¹⁶ Watt).

Les signaux GPS sont donc très sensibles aux brouillages (intentionnels ou pas) provenant d'autres équipements radioélectriques.

Les brouillages peuvent par exemple être une émission hors bande d'un émetteur de télévision dans les fréquences du GPS, ou un brouilleur de fort niveau sur un terrain d'opérations militaires.

Parmi les techniques à ce jour connues pour améliorer la tenue au brouillage des récepteurs GPS, il existe des techniques analogiques, ou des techniques de numérisation sur un bit, mais la plus avantageuse est la numérisation sur deux bits, également appelée conversion ou numérisation non-uniforme.

La numérisation sur deux bits permet de recevoir les signaux GPS, malgré la présence de brouillage de forme sinus CW (" Continuous Wave "selon la terminologie anglo-saxonne), dont l'énergie forme une raie dans un spectre de réception des signaux GPS et dont l'amplitude crête est constante.

Cette numérisation sur deux bits ne permet toutefois pas de traiter efficacement des signaux de brouillage plus subtils qui ne se différencient que très peu du signal utile. C'est le cas notamment des signaux de brouillage de type gaussien de bande étroite (typiquement de bande jusqu'à 100 kHz) dont l'énergie s'étale dans le spectre de réception des signaux GPS, avec des fluctuations rapides de l'amplitude crête du signal de brouillage, et qui s'avèrent par conséquent plus difficile à rejeter.

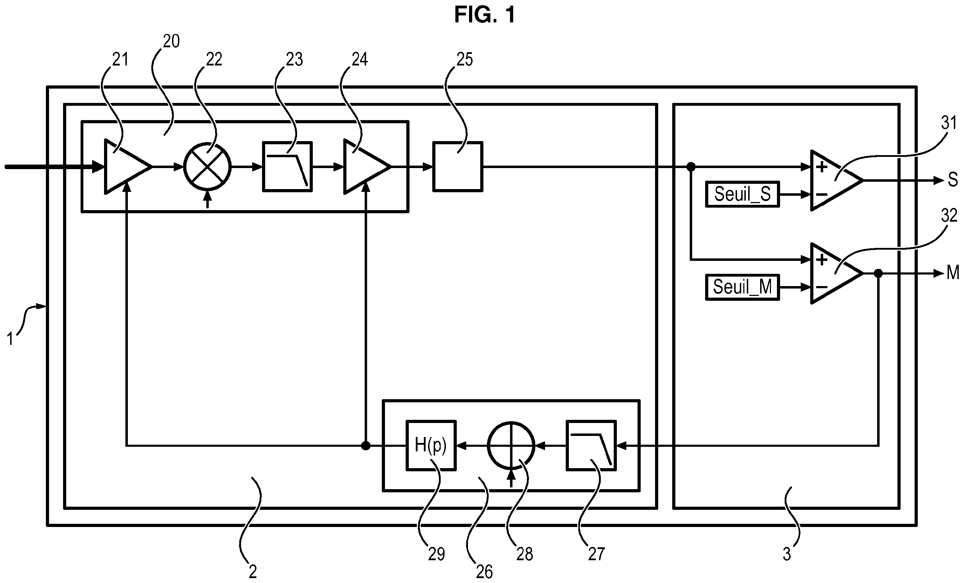

La demanderesse a déjà développé une technique de réduction de ces brouilleurs de type gaussien à bande étroite. Cette technique, exposée dans la demande de brevet EP 2 336 800 A1, met en oeuvre une boucle de Contrôle Automatique de Gain (CAG) rapide. On a représenté sur la figure 1 les éléments d'un récepteur de localisation GNSS mettant en oeuvre cette réduction d'un signal de brouillage bande étroite, ces éléments étant intégrés au sein d'un module radiofréquence 1 agencé entre une antenne de réception des signaux radiofréquences GNSS et un module numérique configuré pour mettre en oeuvre la corrélation GPS. Le module radiofréquence 1 comporte une section analogique 2 et une section numérique 3.

La section analogique 2 comprend un contrôleur 20 recevant les signaux en provenance de l'antenne et un convertisseur analogique-numérique 25 en sortie du contrôleur 20. Comme indiqué dans la demande EP 2 336 800, le contrôleur 20 est configuré pour mettre en oeuvre en continu une normalisation d'une amplitude de crête instantanée des signaux en provenance de l'antenne (signal utile auquel se superpose le cas échéant un signal de brouillage), de sorte qu'un signal de brouillage à bande étroite ainsi normalisé soit converti en un signal de brouillage sinusoïdal. Le contrôleur 20 comporte un amplificateur radiofréquence à gain variable 21, un mélangeur 22, un filtre de canal à ondes de surface 23 et un amplificateur de fréquence intermédiaire à gain variable 24.

La section numérique 3 reçoit le signal numérisé par le convertisseur analogique-numérique 25 et le compare au moyen d'un premier comparateur 31 à un seuil de bit de signe Seuil_S pour élaborer un bit de signe S et au moyen d'un second comparateur 32 à un seuil de bit d'amplitude Seuil_M pour élaborer un bit d'amplitude M. Les seuils Seuil_S, Seuil_M sont fixes.

Une boucle de contrôle de gain est par ailleurs implémentée afin de réaliser un asservissement dynamique du gain de chacun des amplificateurs 21, 24, et ce de manière à obtenir un rapport cyclique d'activité du bit d'amplitude M constant. On vient ainsi ajuster le niveau du signal au seuil de bit d'amplitude Seuil_M qui est fixe. La boucle de contrôle de gain est composée du contrôleur 20, du convertisseur analogique-numérique 25, du second comparateur 32 et d'une commande de gain 26 implémentée dans la section analogique 1. La commande de gain 26 comporte plus précisément un filtre passe-bas 27 qui reçoit le bit d'amplitude M, un différentiateur 28 et un filtre de boucle 29 dont la sortie fournit la commande d'asservissement dynamique du gain des amplificateurs 21, 24.

La boucle de contrôle de gain est ainsi principalement composée d'éléments analogiques et radiofréquences dont les caractéristiques sont peu linéaires et dispersives, ce qui rend difficile son réglage. Ce problème est d'autant plus aigu dans le cas de systèmes multivoies pour lesquels les erreurs différentielles entre les différentes voies sont très difficiles à étalonner.

A titre d'exemple, la commande de gain radiofréquence présente une variation de pente d'un rapport 1 à 10. Ce rapport doit être pris en compte dans le réglage de la stabilité de la boucle avec pour conséquence une réduction de la bande passante de la boucle, et donc de la bande du brouilleur pouvant être traité.

Un autre exemple concerne la présence du filtre de canal 23 dans la boucle de contrôle de gain. Un tel filtre présente en effet un retard important, de l'ordre de la microseconde, limitant implicitement les caractéristiques en fréquence de la boucle et son temps de réponse.

On connaît également de la demande US 2004/0257253 A1 un récepteur d'un signal radiofréquence bruité comportant un amplificateur à gain fixe, un convertisseur analogique-numérique et un décideur à seuils variables comprenant une boucle d'asservissement de seuils.

La demande US 7,324,037 B1 décrit un récepteur d'un signal radiofréquence noyé dans le bruit, comme par exemple un signal GPS, le récepteur comprenant une boucle d'asservissement d'un bit d'amplitude afin de maintenir constant le rapport cyclique du signal détecté.

### EXPOSÉ DE L'INVENTION

Un objectif de l'invention est de s'affranchir de la forte variabilité des éléments radiofréquences, en particulier pour permettre un étalonnage plus aisé et un gain en performance.

Un autre objectif de l'invention est d'élargir la bande passante de la boucle de manière à mieux rejeter le brouilleur « 100 kHz» voire des brouilleurs de plus large bande.

Encore un autre objectif de l'invention est d'améliorer le temps de réaction ce qui permettrait de traiter d'autres types de brouilleurs comme par exemple les brouilleurs pulsés.

Afin de répondre à l'une et/ou l'autre de ces objectifs, l'invention propose selon son premier aspect, un récepteur d'un signal radiofréquence pouvant être noyé dans un signal de brouillage, comprenant :
- une section analogique comportant un contrôleur comprenant au moins un amplificateur, et un convertisseur analogique-numérique en sortie du contrôleur ;
- une section numérique en aval de la section analogique, comportant un comparateur configuré pour élaborer un bit d'amplitude sur la base de la comparaison du signal en sortie de la section analogique avec un seuil de bit d'amplitude,
caractérisé en ce que l'au moins un amplificateur du contrôleur de la section analogique est un amplificateur à gain fixe, et en ce que la section numérique comporte une boucle d'asservissement du seuil de bit d'amplitude configurée de manière à maintenir constant le rapport cyclique d'activité du bit d'amplitude et à convertir un signal de brouillage à bande étroite en un signal de brouillage sinusoïdal.

### BREVE DESCRIPTION DES DESSINS

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 déjà commentée ci-dessus représente un récepteur conforme à l'art antérieur ;
- la figure 2 représente un récepteur selon un mode de réalisation possible de l'invention ;
- la figure 3 représente une variante de réalisation du récepteur de la figure 2.

### DESCRIPTION DETAILLEE DE L'INVENTION

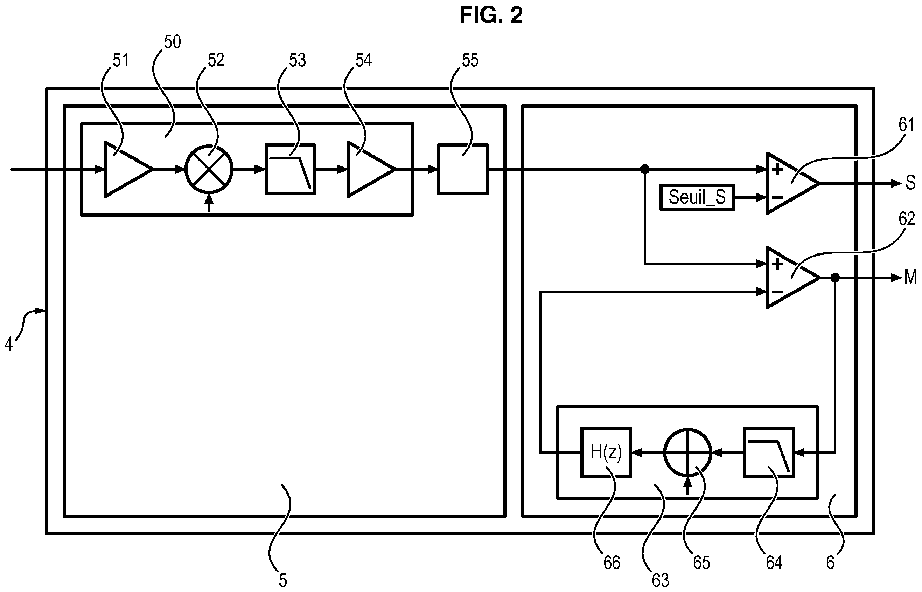

En référence à la figure 2, l'invention concerne selon son premier aspect un récepteur d'un signal radiofréquence pouvant être noyé dans un signal de brouillage.

Le signal radiofréquence est typiquement un signal à étalement de spectre, par exemple de type CDMA (Code Division Multiple Access) ou FDMA (Frequency Division Multiple Access), notamment un signal de type GNSS, par exemple un signal GPS. On prendra dans ce qui suit l'exemple d'un signal GPS qui peut potentiellement se retrouver noyé dans un signal de brouillage, par exemple un signal de brouillage CW ou par un signal de brouillage de type gaussien bande étroite.

Le récepteur comporte un module radiofréquence 4 agencé entre une antenne de réception des signaux radiofréquences GNSS et un module numérique configuré pour mettre en oeuvre la corrélation GPS.

Le module radiofréquence 4 comprend une section analogique 5 dans laquelle on retrouve un contrôleur 50 et un convertisseur analogique-numérique 55. Contrairement au contrôleur 20 de la figure 1 conforme à l'enseignement de la demande EP 2 336 800, le contrôleur 50 de l'invention ne réalise pas la fonction de normalisation de l'amplitude de crête instantanée et n'a donc aucune incidence sur cette caractéristique. Le convertisseur analogique-numérique 55 est typiquement un convertisseur permettant d'obtenir une grande résolution (par exemple 14 bits) à haute fréquence, et accessoirement à basse consommation.

Dans le cadre de l'invention, le contrôleur 50 comporte au moins un amplificateur à gain fixe. Dans un mode de réalisation possible, le contrôleur 50 comporte un amplificateur radiofréquence à gain fixe 51, un mélangeur 52, un filtre de canal à ondes de surface 53 et un amplificateur de fréquence intermédiaire à gain fixe 54.

Le module radiofréquence 4 comporte également une section numérique 6 en aval de la section analogique 5. On y retrouve un comparateur 61 configuré pour élaborer un bit de signe S sur la base de la comparaison du signal en sortie de la section analogique avec un seuil de bit de signe Seuil_S fixe. On y retrouve également un comparateur 62 configuré pour élaborer un bit d'amplitude M sur la base de la comparaison du signal en sortie de la section analogique avec un seuil de bit d'amplitude Seuil_M. Dans le cadre de l'invention le seuil de bit d'amplitude Seuil_M n'est pas fixe mais au contraire asservi dynamiquement au moyen d'une boucle d'asservissement composée du comparateur 62 et d'une commande du seuil de bit d'amplitude 63, et configurée de manière à maintenir constant le rapport cyclique d'activité du bit d'amplitude.

De par sa rapidité, la boucle d'asservissement 62, 63 du seuil de bit d'amplitude a la capacité à suivre les variations instantanées de l'amplitude de crête du signal. Cette boucle, implémentée exclusivement en numérique, réalise la conversion d'un signal de brouillage à bande étroite en un signal de brouillage de type sinusoïdal, alors que cette conversion était réalisée par le contrôleur analogique 20 de la figure 1 en conformité avec l'enseignement de la demande EP 2 336 800.

La commande du seuil de bit d'amplitude 63 est composée au moins d'un filtre passe-bas 64 et d'un différentiateur 65. Elle peut également comprendre un filtre intégrateur à un pôle 66.

La section numérique 6 peut être implémentée au moyen d'un réseau FPGA (« Field Programmable Gate Array » désignant un circuit intégré prédiffusé programmable). Le traitement numérique fonctionne par exemple à 41 MHz de fréquence d'échantillonnage.

On relèvera que contrairement au récepteur de la figure 1 pour lequel on vient ajuster le niveau du signal à un seuil de bit d'amplitude Seuil_M qui est fixe, dans le cadre de l'invention le niveau du signal n'est pas modifié et c'est le seuil de bit d'amplitude Seuil_M qui est ajusté. Ainsi, la réponse à la variation de niveau RF en entrée n'est plus traitée par des amplificateurs à gain variable, mais par l'ajustement du seuil de bit d'amplitude sur un signal numérique à grande dynamique.

On relèvera par ailleurs que la commande du seuil du bit d'amplitude 63 permettant de maintenir constant le rapport cyclique d'activité du bit d'amplitude est désormais implémentée au sein de la section numérique 6, là où les éléments permettant d'atteindre le même objectif étaient implémentés dans la section analogique pour le récepteur de la figure 1. L'asservissement de ce rapport cyclique ne passe donc plus par un réglage de gain analogique aux fréquences radio mais par le réglage du seuil d'un comparateur numérique basse fréquence. La boucle numérique exclut en outre les éléments analogiques et radiofréquences ce qui permet de s'affranchir des problèmes de variabilité rencontrés avec le récepteur de la figure 1. L'étalonnage s'avère donc plus facile, et ce y compris pour les systèmes multivoies. La boucle numérique exclut aussi le filtre de canal présentant un retard important, levant ainsi la limitation en temps de réponse et en fréquence de coupure de l'asservissement présente dans la précédente implémentation. La bande passante ainsi élargie permet de mieux rejeter le brouilleur « 100 kHz» voire des brouilleurs de plus large bande, ou encore de rejeter d'autres types de brouilleur comme par exemple les brouilleurs puisés.

Dans un mode de réalisation possible, la section numérique 6 délivre non seulement le bit de signe S et le bit d'amplitude M mais également un bit de type qui prend par exemple la valeur 0 lorsque le signal de brouillage est de type gaussien et la valeur 1 lorsque le signal de brouillage est de type CW et qui peut être utilisé pour pondérer les poids des bits de signe et d'amplitude. On pourra se reporter à la publication EP 2 336 800 A1 déjà présentée ci-dessus pour plus de détails sur l'élaboration du bit de type et la pondération des bits de signe et d'amplitude.

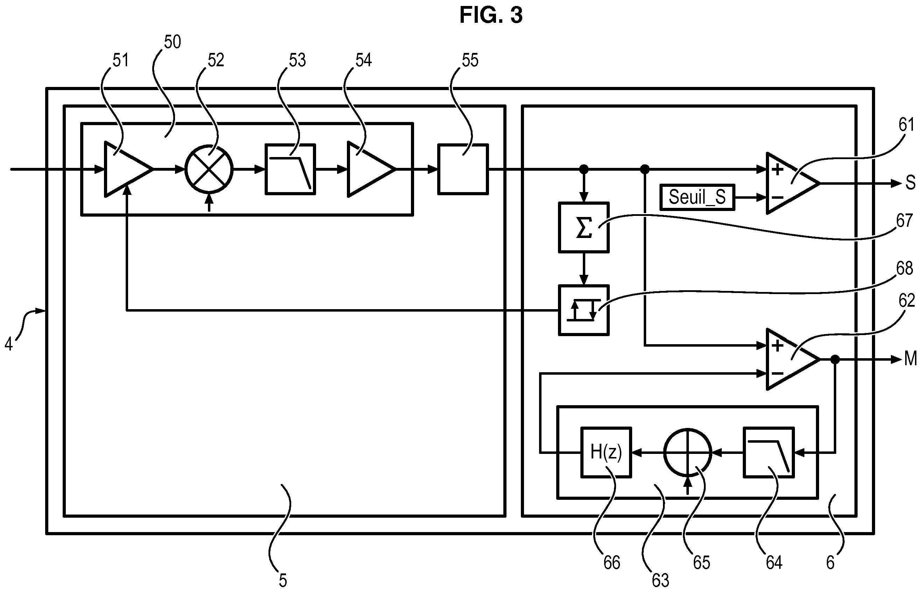

La figure 3 représente une variante de réalisation du module radiofréquence 4 de la figure 2. Dans cette variante, la section numérique 6 comporte un estimateur de niveau de signal 67 configuré pour estimer le niveau du signal en sortie de la section analogique 5 et un commutateur 68 configuré pour réaliser une commutation statique du gain fixe (et non asservissement dynamique de gain variable) de l'un et/ou l'autre des amplificateurs 51, 54 du contrôleur 50 de la section analogique 5 en fonction du niveau de signal estimé. Ceci permet d'étendre la gamme d'entrée des signaux RF, tout en conservant le bénéfice du traitement numérique de la dynamique en fréquence de la boucle. L'estimateur 67 est par exemple un intégrateur, tandis que le commutateur 68 met typiquement en oeuvre une détection de seuil à hystérésis.

L'invention n'est par ailleurs pas limitée au récepteur selon son premier aspect, mais s'étend également à un procédé de réception d'un signal radiofréquence pouvant être noyé dans un signal de brouillage au moyen d'un récepteur comprenant :
- une section analogique comportant un contrôleur comprenant au moins un amplificateur, et un convertisseur analogique-numérique en sortie du contrôleur,
- une section numérique en aval de la section analogique, comportant un comparateur configuré pour élaborer un bit d'amplitude sur la base de la comparaison du signal en sortie de la section analogique avec un seuil de bit d'amplitude,
procédé dans lequel le gain de l'au moins un amplificateur du contrôleur de la section analogique est fixe, et dans lequel le seuil de bit d'amplitude est asservi de manière à maintenir constant le rapport cyclique d'activité du bit d'amplitude et à convertir un signal de brouillage à bande étroite en un signal de brouillage sinusoïdal.

Dans une variante de ce procédé, on met en oeuvre une estimation du niveau de signal reçue par la section numérique, et une commutation statique du gain fixe de l'au moins un amplificateur en fonction du résultat de ladite estimation.

## Revendications

1. Récepteur d'un signal radiofréquence pouvant être noyé dans un signal de brouillage, comprenant :
- une section analogique (5) comportant un contrôleur (50) comprenant au moins un amplificateur (51, 54), et un convertisseur analogique-numérique (55) en sortie du contrôleur ;
- une section numérique (6) en aval de la section analogique, comportant un comparateur (62) configuré pour élaborer un bit d'amplitude (M) sur la base de la comparaison du signal en sortie de la section analogique avec un seuil de bit d'amplitude (Seuil_M),
**caractérisé en ce que** l'au moins un amplificateur (51, 54) du contrôleur de la section analogique est un amplificateur à gain fixe, et **en ce que** la section numérique comporte une boucle d'asservissement (62, 63) du seuil de bit d'amplitude configurée de manière à maintenir constant le rapport cyclique d'activité du bit d'amplitude et à convertir un signal de brouillage à bande étroite en un signal de brouillage sinusoïdal.

2. Récepteur selon la revendication 1, dans lequel la boucle d'asservissement comprend ledit comparateur (62) et une commande (63) du seuil de bit d'amplitude (Seuil_M), ladite commande (63) comprenant au moins un filtre passe-bas (64) et un différentiateur (65).

3. Récepteur selon la revendication 2, dans lequel ladite commande (63) du seuil de bit d'amplitude comporte en outre un filtre intégrateur à un pôle (66).

4. Récepteur selon l'une des revendications précédentes, dans lequel la section numérique comporte un estimateur de niveau de signal (67) configuré pour estimer le niveau du signal en sortie de la section analogique et un commutateur (68) configuré pour réaliser une commutation statique du gain fixe de l'au moins un amplificateur (51, 54) du contrôleur de la section analogique en fonction du niveau de signal estimé.

5. Récepteur selon la revendication précédente, dans lequel l'estimateur est un intégrateur et le commutateur met en oeuvre une détection de seuil à hystérésis.

6. Récepteur selon l'une des revendications précédentes, dans lequel le contrôleur comporte un amplificateur radiofréquence à gain fixe (51), un mélangeur (52), un filtre de canal (53) et un amplificateur de fréquence intermédiaire à gain fixe (54).

7. Récepteur selon l'une des revendications précédentes, dans lequel la section numérique est implémentée au moyen d'un réseau FPGA.

8. Procédé de réception d'un signal radiofréquence pouvant être noyé dans un signal de brouillage au moyen d'un récepteur comprenant :
- une section analogique (5) comportant un contrôleur (50) comprenant au moins un amplificateur (51, 54), et un convertisseur analogique-numérique (55) en sortie du contrôleur,
- une section numérique (6) en aval de la section analogique, comportant un comparateur (62) configuré pour élaborer un bit d'amplitude (M) sur la base de la comparaison du signal en sortie de la section analogique avec un seuil de bit d'amplitude (Seuil_M),
procédé dans lequel le gain de l'au moins un amplificateur (51, 54) du contrôleur de la section analogique est fixe, et dans lequel le seuil de bit d'amplitude est asservi de manière à maintenir constant le rapport cyclique d'activité du bit d'amplitude et à convertir un signal de brouillage à bande étroite en un signal de brouillage sinusoïdal.

9. Procédé selon la revendication précédente, dans lequel on met en oeuvre une estimation du niveau de signal reçue par la section numérique, et une commutation statique du gain fixe de l'au moins un amplificateur de la section analogique en fonction du résultat de ladite estimation.

## Patentansprüche

1. Empfänger eines Funkfrequenzsignals, das in einem Störsignal eingebettet sein kann, umfassend:
- einen analogen Abschnitt (5), der eine Steuerung (50), welche mindestens einen Verstärker (51, 54) umfasst, und einen Analog-Digital-Wandler (55) am Ausgang der Steuerung beinhaltet;
- einen digitalen Abschnitt (6) stromabwärts des analogen Abschnitts, der einen Vergleicher (62) beinhaltet, welcher dafür ausgebildet ist, ein Amplitudenbit (M) auf der Basis des Vergleichs des Signals am Ausgang des analogen Abschnitts mit einer Amplitudenbit-Schwelle (Schwelle_M) zu erstellen,
**dadurch gekennzeichnet, dass** der mindestens eine Verstärker (51, 54) der Steuerung des analogen Abschnitts ein Verstärker mit fester Verstärkung ist, und dadurch, dass der digitale Abschnitt eine Regelschleife (62, 63) der Amplitudenbit-Schwelle beinhaltet, die so ausgebildet ist, dass das Arbeitstastverhältnis des Amplitudenbits konstant gehalten wird, und dass ein schmalbandiges Störsignal in ein sinusförmiges Störsignal umgewandelt wird.

2. Empfänger nach Anspruch 1, wobei die Regelschleife den Vergleicher (62) und eine Regelung (63) der Amplitudenbit-Schwelle (Schwelle_M) umfasst, wobei die Regelung (63) mindestens einen Tiefpassfilter (64) und einen Differenzierer (65) umfasst.

3. Empfänger nach Anspruch 2, wobei die Regelung (63) der Amplitudenbit-Schwelle weiter einen einpoligen Integrationsfilter (66) beinhaltet.

4. Empfänger nach einem der vorstehenden Ansprüche, wobei der digitale Abschnitt einen Signalpegelschätzer (67) beinhaltet, der dafür ausgebildet ist, den Pegel des Signals am Ausgang des analogen Abschnitts zu schätzen, und einen Schalter (68), der dafür ausgebildet ist, eine statische Umschaltung der festen Verstärkung des mindestens einen Verstärkers (51, 54) der Steuerung des analogen Abschnitts in Abhängigkeit vom geschätzten Signalpegel auszuführen.

5. Empfänger nach dem vorstehenden Anspruch, wobei der Schätzer ein Integrierer ist, und der Schalter eine Hysterese-Schwellenerkennung einsetzt.

6. Empfänger nach einem der vorstehenden Ansprüche, wobei die Steuerung einen Funkfrequenzverstärker mit fester Verstärkung (51), einen Mischer (52), einen Kanalfilter (53) und einen Zwischenfrequenzverstärker mit fester Verstärkung (54) beinhaltet.

7. Empfänger nach einem der vorstehenden Ansprüche, wobei der digitale Abschnitt mittels eines FPGA-Netzwerks implementiert ist.

8. Verfahren zum Empfangen eines Funkfrequenzsignals, das in einem Störsignal eingebettet sein kann, mittels eines Empfängers, welcher umfasst:
- einen analogen Abschnitt (5), der eine Steuerung (50), welche mindestens einen Verstärker (51, 54) umfasst, und einen Analog-Digital-Wandler (55) am Ausgang der Steuerung beinhaltet,
- einen digitalen Abschnitt (6) stromabwärts des analogen Abschnitts, der einen Vergleicher (62) beinhaltet, welcher dafür ausgebildet ist, ein Amplitudenbit (M) auf der Basis des Vergleichs des Signals am Ausgang des analogen Abschnitts mit einer Amplitudenbit-Schwelle (Schwelle_M) zu erstellen,
wobei bei dem Verfahren die Verstärkung des mindestens einen Verstärkers (51, 54) der Steuerung des analogen Abschnitts fest ist, und wobei die Amplitudenbit-Schwelle so geregelt wird, dass das Arbeitstastverhältnis des Amplitudenbits konstant gehalten wird, und dass ein schmalbandiges Störsignal in ein sinusförmiges Störsignal umgewandelt wird.

9. Verfahren nach dem vorstehenden Anspruch, wobei eine Schätzung des vom digitalen Abschnitt empfangenen Signalpegels und eine statische Umschaltung der festen Verstärkung des mindestens einen Verstärkers des analogen Abschnitts in Abhängigkeit vom Ergebnis der Schätzung eingesetzt werden.

## Claims

1. Receiver of a radiofrequency signal that can be embedded in a jamming signal, comprising:
- an analog section (5) comprising a controller (50) comprising at least one amplifier (51, 54), and an analog-to-digital converter (55) at the output of the controller;
- a digital section (6) downstream of the analog section, comprising a comparator (62) configured to elaborate an amplitude bit (M) on basis of comparison of the output signal of the analog section with an amplitude bit threshold (Threshold_M),
**characterised in that** the at least one amplifier (51, 54) of the controller of the analog section is a fixed gain amplifier, and **in that** the digital section comprises a control loop (62, 63) of the amplitude bit threshold configured to maintain an activity duty cycle of the amplitude bit constant and to convert a narrow-band jamming signal into a sinusoidal jamming signal.

2. Receiver according to claim 1, wherein the control loop comprises said comparator (62) and a control (63) of the amplitude bit threshold (Threshold_M), said control (63) comprising at least one low-pass filter (64) and a differentiator (65).

3. Receiver according to claim 2, wherein said control (63) of the amplitude bit threshold further comprises a pole filter integrator (66).

4. Receiver according to one of the preceding claims, wherein the digital section comprises a signal level estimator (67) configured to estimate the level of the signal at the output of the analog section and a switch (68) configured to carry out a static switching of the fixed gain of the at least one amplifier (51, 54) of the controller of the analog section according to the estimated signal level.

5. Receiver as claimed in the preceding claim, wherein the estimator is an integrator and the switch implements a hysteresis threshold detection.

6. Receiver according to one of the preceding claims, wherein the controller comprises a fixed gain radiofrequency amplifier (51), a mixer (52), a channel filter (53) and a fixed gain intermediate frequency amplifier (54).

7. Receiver according to one of the preceding claims, wherein the digital section is implemented by means of a FPGA network.

8. Method for receiving a radiofrequency signal that can be embedded in a jamming signal by means of a receiver comprising:
- an analog section (5) comprising a controller (50) comprising at least one amplifier (51, 54), and an analog-to-digital converter (55) at the output of the controller,
- a digital section (6) downstream of the analog section, comprising a comparator (62) configured to elaborate an amplitude bit (M) on basis of comparison of the output signal of the analog section with an amplitude bit threshold (Threshold_M),
method wherein the gain of the at least one amplifier (51, 54) of the controller of the analog section is fixed, and wherein the amplitude bit threshold is controlled in such a way as to maintain constant the activity duty cycle of the amplitude bit and to convert a narrow-band jamming signal into a sinusoidal jamming signal.

9. Method as claimed in the preceding claim, wherein an estimation of the signal level received by the digital section is implemented, and a static switching of the fixed gain of the at least one amplifier of the analog section according to the result of said estimation.
